# EUROPEAN PATENT SPECIFICATION

(11) **EP 0 982 983 B1**
(45) Date of publication and mention of the grant of the patent: **06.03.2002**
(21) Application number: 97945936.9
(22) Date of filing: 11.11.1997
(51) Int. Cl.: A01K 13/00

(54) **INHIBITION OF CRIB-BITING**
VERHINDERUNG DES KOPPENS DER PFERDE
PROCEDE VISANT A EMPECHER UN ANIMAL DE MORDRE SA MANGEOIRE

(30) Priority: 13.11.1996 GB 9623645
(43) Date of publication of application: 08.03.2000
(73) Proprietor: Byrne, Allen J., Clane, County Kildare (IE)
(72) Inventor: Groves, Jeffrey, Crewe, Cheshire CW3 9BS (GB)
(74) Representative: Brophy, David
(86) International application number: GB9703082
(87) International publication number: WO9820729

(56) References cited:
- DE-C- 7 327

## Description

This invention relates to a method of inhibiting animals and in particular horses from biting the wooden structure of a stable or an enclosing fence.

Horses are intelligent animals and easily get bored. Often they try to relieve their boredom by biting the wooden structure of a stable (sometimes known as crib biting) and their strong teeth and jaws can ruin the wood structure of a stable very quickly.

Three methods have been used in the past to prevent such damage. One method was to paint the woodwork with a substance which the horse did not like. But no suitable wood covering has been found which is either not-toxic to the animal or which does not have a smell unpleasant to humans.

Another method is to reinforce the wooden structure of the stable with metal strips. But this is expensive and unsightly.

A third method is to use an electric wire carrying a high voltage, see e.g. document DE-C-7327. This is effective but a lot of horses once they have touched the wire and received a shock refuse to return to the stable. Further it is a danger to other animals and children.

The object of this invention is to provide a novel method of inhibiting a horse or other animal from wood biting.

According to the first method of the present invention there is provided a method of inhibiting an animal from biting the wood structure of a stable or a wooden fence which comprises embedding in lengths of the wood at a height at which the animal can bite them, a thin metal wire of from 0.5 to 2mm thickness, connecting the embedded wire to an earthed return voltage source to produce an electric voltage of from 5 to 30 volts so that when the electrical circuit is earthed through the mouth of the animal, through the animal and to the ground or stable floor a weak electric current flows through the circuit.

According to a second method of the present invention there is provided a method of inhibiting an animal from biting the wood of a stable or a wooden fence which comprises embedding in the lengths of wood at a height at which the animal can bite them two metal wires set close together and from 0.5 to 2mm thickness, connecting the embedded wires to a voltage source to produce an electrical voltage of from 5 to 30 volts so that when the animal bites the wood containing the two wires the animals saliva completes the electric circuit and causes a weak current to flow through the wires.

The method of the present invention is of particular use in inhibiting horses from biting their stables and its use for horses is described hereinafter.

Usfully a transformer of 100VA is used in the circuit. This is sufficient to produce a tingling sensation in the mouth of the horse so that the horse stops his biting of the wood. However, if any other part of the horse other than his mouth touches the metal wire no tingling sensation is felt. Similarly if a human hand for example touches the wire no tingling sensation is felt. However, the strength of the tingling sensation is not sufficient to alarm the horse to such an extent that the animal will not enter the stable containing the circuit which often happens when an ordinary electric wire carrying a low current at a high potential is used to protect the wooden fittings in a stable.

Usually there is sufficient moisture on the floor of the stable to complete the electric circuit. If however, the stable floor is of concrete or brick and is absolutely dry this floor must be wetted to complete the circuit in the first method of the present invention.

In the second method of the present invention no earthing through the ground is required as the saliva of the animal completes the circuit.

In the methods of the present invention preferably the main voltage is used together with a transformer to produce the required low voltage of from 5 to 30 volts. In the first method of the present invention the transformer is earthed to provide an earthed return voltage source.

Preferably the thickness of the wire is about 1mm. Usually the wire is made of copper. Animal's saliva is an extremely good electrical conductor because of its high concentration of salts. Furthermore the nerve ends of the tongue are highly sensitive.

In both methods of the present invention preferably the voltage generator produces a steady all pulse voltage which may be used in all stables, either time pulsed or constant. It is to be understood that a single voltage generator can be used to provide the required electrical protection for several stables and in fact can protect a whole stable block.

Usefully controls are present on the voltage generator facia to enable a high, low or medium voltage to be produced depending on the resistance of the circuit due to varying ground conditions in different locations.

## Claims

1. A method of inhibiting an animal from biting the wooden structure of a stable or a wooden fence in a field which comprises embedding in lengths of the wood at a height at which the animal can bite them, a thin metal wire of from 0.5 to 2mm thickness, connecting the embedded wire to an earthed return voltage source to produce an electric voltage of from 5 to 30 volts so that when the electrical circuit is earthed through the mouth of the animal, through the animal and to the ground or stable floor a weak electric current flows through the circuit.

2. A method of inhibiting an animal from biting the wooden structure of a stable or a wooden fence which comprises embedding in the lengths of wood at a height at which the animal can bite them two metal wires set close together and from 0.5 to 2mm thickness, connecting the embedded wires to a voltage source to produce an electrical voltage of from 5 to 30 volts so that when the animal bites the wood containing the two wires the animal's saliva completes the electric circuit and causes a weak current to flow through the wires.

3. A method according to either claim 1 or claim 2 wherein a current of about 3 amps is produced in the circuit.

4. A method according to either claim 1 or claim 2 wherein a transformer is provided to produce the required low voltage of from 5 to 30 volts as an end-product within the system.

5. A method according to either claim 1 or claim 2 wherein the thickness of the wire is about 1mm.

6. A method according to either claim 1 or claim 2 wherein the wire is made of copper.

7. A method according to either claim 1 or claim 2 wherein the voltage source produces a steady or pulse voltage.

## Patentansprüche

1. Verfahren zum Hindern eines Tieres am Beißen in die Holzstruktur eines Stalls oder eines Holzzauns in einem Feld, das umfasst, in Längen des Holzes auf einer Höhe, auf der das Tier in es hineinbeißen kann, einen dünnen Metalldraht mit einer Dicke von 0,5 bis 2 mm einzubetten, und den eingebetteten Draht an eine geerdete Rückspannungsquelle zum Erzeugen einer elektrischen Spannung von 5 bis 30 Volt anzuschließen, so dass, wenn der elektrische Stromkreis durch den Mund des Tiers, durch das Tier und an die Erde oder den Stallboden geerdet wird, ein schwacher elektrischer Strom durch den Stromkreis fließt.

2. Verfahren zum Hindern eines Tieres am Beißen in die Holzstruktur eines Stalls oder Holzzauns, das umfasst, in Längen des Holzes auf einer Höhe, auf der das Tier in es beißen kann, zwei Metalldrähte einzubetten, die nahe beieinander eingesetzt sind und eine Dicke von 0,5 bis 2 mm aufweisen, und die eingebetteten Drähte an eine Spannungsquelle zum Erzeugen einer elektrischen Spannung von 5 bis 30 Volt anzuschließen, so dass, wenn das Tier in das die beiden Drähte enthaltende Holz beißt, der Speichel des Tieres den elektrischen Stromkreis fertig stellt und Fluss eines schwachen Stroms durch die Drähte verursacht.

3. Verfahren nach Anspruch 1 oder Anspruch 2, bei dem ein Strom von etwa 3 Ampere in dem Stromkreis erzeugt wird.

4. Verfahren nach Anspruch 1 oder Anspruch 2, bei dem ein Transformator vorgesehen ist, um die erforderliche niedrige Spannung von 5 bis 30 Volt als ein Endprodukt innerhalb des Systems zu erzeugen.

5. Verfahren nach Anspruch 1 oder Anspruch 2, bei dem die Dicke des Drahts etwa 1 mm beträgt.

6. Verfahren nach Anspruch 1 oder Anspruch 2, bei dem der Draht aus Kupfer besteht.

7. Verfahren nach Anspruch 1 oder Anspruch 2, bei dem die Spannungsquelle eine gleichbleibende oder Impulsspannung erzeugt.

## Revendications

1. Méthode pour empêcher un animal de ronger la structure en bois d'une écurie ou d'une clôture en bois dans un champ qui comprend noyer dans des sections du bois à une hauteur à laquelle l'animal peut les ronger, un mince fil métallique de 0,5 à 2 mm d'épaisseur, connecter le fil noyé à une source de tension de retour mise à la terre pour produire une tension électrique de 5 à 30 volts de sorte que lorsque le circuit électrique est mis à la terre à travers la bouche de l'animal, à travers l'animal et au sol ou plancher de l'écurie un faible courant électrique coule dans le circuit.

2. Méthode pour empêcher un animal de ronger la structure en bois d'une écurie ou d'une clôture en bois qui comprend noyer dans des sections de bois à une hauteur à laquelle l'animal peut les ronger deux fils métalliques posés proches l'un de l'autre et de 0,5 à 2 mm d'épaisseur, connecter les fils noyés à une source de tension pour produire une tension électrique de 5 à 30 volts de sorte que lorsque l'animal ronge le bois contenant les deux fils la salive de l'animal termine le circuit électrique et fait qu'un faible courant coule dans les fils.

3. Méthode selon la revendication 1 ou la revendication 2 dans laquelle un courant d'environ 3 A est produit dans le circuit.

4. Méthode selon la revendication 1 ou la revendication 2 dans laquelle un transformateur est fourni pour produire la faible tension requise de 5 à 30 volts en tant que produit final à l'intérieur du système.

5. Méthode selon la revendication 1 ou la revendication 2 dans laquelle l'épaisseur du fil est d'environ 1 mm.

6. Méthode selon la revendication 1 ou la revendication 2 dans laquelle le fil est fait de cuivre.

7. Méthode selon la revendication 1 ou la revendication 2 dans laquelle la source de tension produit une tension constante ou pulsée.
